# EUROPEAN PATENT SPECIFICATION

(11) **EP 2 221 099 B1**
(45) Date of publication and mention of the grant of the patent: **03.04.2013**
(21) Application number: 10250241.6
(22) Date of filing: 12.02.2010
(51) Int. Cl.: B01D 46/24

(54) **Honeycomb structure**
Wabenstruktur
Structure en nid d'abeille

(30) Priority: 16.02.2009 JP 2009032555
(43) Date of publication of application: 25.08.2010
(73) Proprietor: NGK Insulators, Ltd., Nagoya-City, Aichi Pref. 467-8530 (JP)
(72) Inventor: Matsumoto, Tasuku, Nagoya City Aichi-ken 467-8530 (JP)
(74) Representative: Paget, Hugh Charles Edward

(56) References cited:
- EP-A1- 1 944 073
- EP-A2- 1 769 838

## Description

### BACKGROUND OF THE INVENTION

### Field of the Invention

The present invention relates to a honeycomb structure. More particularly, it relates to a honeycomb structure which has a large effective filter area and which has an only small pressure loss when a fluid passes through the structure.

### Description of the Related Art

There is a rising need for the removal, from an exhaust gas, of a particulate material in the exhaust gas discharged from a combustion device such as an engine for an automobile, an engine for construction machine or a stationary engine for an industrial machine in consideration of an influence on environment. To meet the need, a honeycomb structure made of a ceramic material or the like is broadly used as a filter (a diesel particulate filter: DPF) to remove the particulate material. As the DPF, there is used, for example, a filter having a structure including porous partition walls which define a plurality of cells as through channels of a fluid so that predetermined cells each having one end opened and the other end plugged and the remaining cells each having one end plugged and the other end opened are alternately arranged. Moreover, during use, the fluid (the exhaust gas) is caused to flow into the other end of the DPF where the remaining cells open, and the exhaust gas which has flowed thereinto is passed through the partition walls and discharged as the passed fluid into the predetermined cells. Afterward, the passed fluid is discharged through the one end of the filter where the predetermined cells open, whereby the particulate material in the exhaust gas is collected and removed by the partition walls.

Moreover, the collected particulate material is burnt and removed, so that DPF is usually regenerated and continuously used. However, there has been a problem that cracking occurs around plugging portions owing to thermal shock during the regeneration.

To solve this problem, a ceramic honeycomb filter has been disclosed in which concave portions having contact angles of 1° or more and less than 90° with respect to the partition walls are provided in the surfaces of the plugging portions on a through channel side so as to attach the plugging portions closely to the partition walls, whereby the filter exposed even to a high temperature is not cracked owing to the thermal shock (e.g., see Patent Document 1).

[Patent Document 1] JP-A-2002-248311

However, there has been a problem that when the surfaces of the plugging portions on the through channel side (inside the cells) are provided with the concave portions, the exhaust gas resides in dented portions before the particulate material is deposited, and the pressure loss of the DPF accordingly increases.

The present invention has been developed in view of such problems of the conventional technology, and an object thereof is to provide a honeycomb structure which has a large effective filter area and which has an only small pressure loss when the fluid passes through the structure.

EP-A-1769838 discloses a honeycomb filter with plug portions formed alternately at opposite end faces of the honeycomb filter. Each plug has a projection at its central position, corresponding to the centre axis of the corresponding cell.

EP-A-1944073 discloses a honeycomb filter having inlet channels and outlet channels alternately plugged. A heat dissipation unit and a heat reduction unit are provided in the area of an inlet channel end.

### SUMMARY OF THE INVENTION

According to the present invention, there is provided a honeycomb structure as set out in claim 1, and a method of making a honeycomb structure as set out in the claim 5.

Preferably, the bottomed tubular plugging portions disposed in the one end surface of the base material have an average pore diameter of 0.1 to 10 µm.

In the honeycomb structure of the present invention, the plugging portions are porous, the average thickness of the walls of the tubular portions of the bottomed tubular plugging portions disposed in at least the one end surface of the base material is from 0.1 to 0.3 times the width of each cell in the cross section of the plugging portion crossing the central axis thereof at right angles, and the length of the tubular portion of the plugging portion in the central axis direction thereof is from 0.3 to 0.8 times the length of the plugging portion in the central axis direction thereof. In this case, the end surface of the base material provided with the plugging portions is the end surface thereof on the side of an outlet of the fluid (an exhaust gas or the like), whereby the plugging portions also function as a filter, which can increase an effective filter area and decrease a pressure loss when the fluid is passed through the structure. Moreover, the tip portion of the space portion formed in the bottomed tubular plugging portion has the outwardly convex circular shape with a radius of 0.5 mm or more in the cross section of the plugging portion including the central axis thereof, which produces an effect of alleviating a heat stress generated during the regeneration of the filter. This effect of alleviating the heat stress is exerted in not only the fluid outlet-side end surface of the base material but also the other end surface thereof.

### BRIEF DESCRIPTION OF THE DRAWINGS

Fig. 1A is a perspective view schematically showing one embodiment of a honeycomb structure of the present invention;
Fig. 1B is a schematic diagram showing the cross section of the embodiment of the honeycomb structure of the present invention parallel to a central axis direction;
Fig. 2 is an enlarged schematic diagram of a region A of Fig. 1B;
Fig. 3 is a schematic diagram showing the cross section of a bottomed tubular plugging portion of the embodiment of the honeycomb structure of the present invention cut along a plane including the central axis of the plugging portion;
Fig. 4 is a schematic diagram showing the cross section of the bottomed tubular plugging portion of the embodiment of the honeycomb structure of the present invention; and
Fig. 5 is a schematic diagram showing the cross section of the bottomed tubular plugging portion of the embodiment of the honeycomb structure of the present invention.

### DESCRIPTION OF THE PREFERRED EMBODIMENT

Hereinafter, an embodiment for carrying out the present invention will specifically be described with reference to the drawings, but it should be understood that the present invention is not limited to the following embodiment and that the appropriate alteration, modification and the like of design are added to the present invention based on the knowledge of a person with ordinary skill without departing from the scope of the present invention.

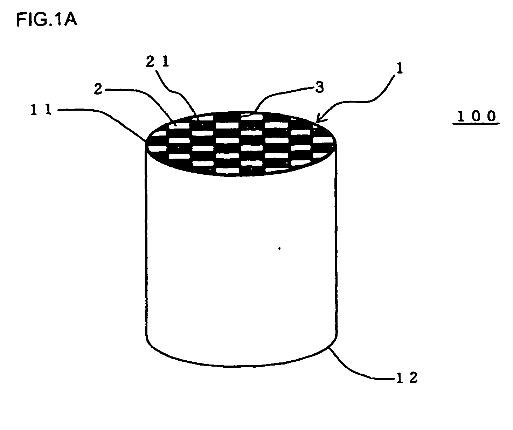

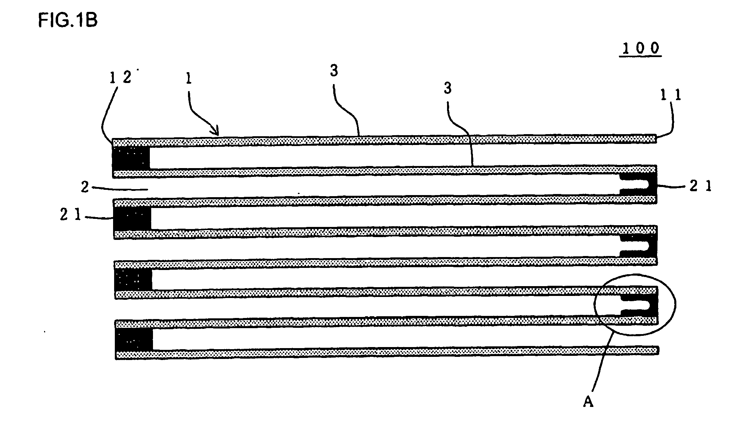

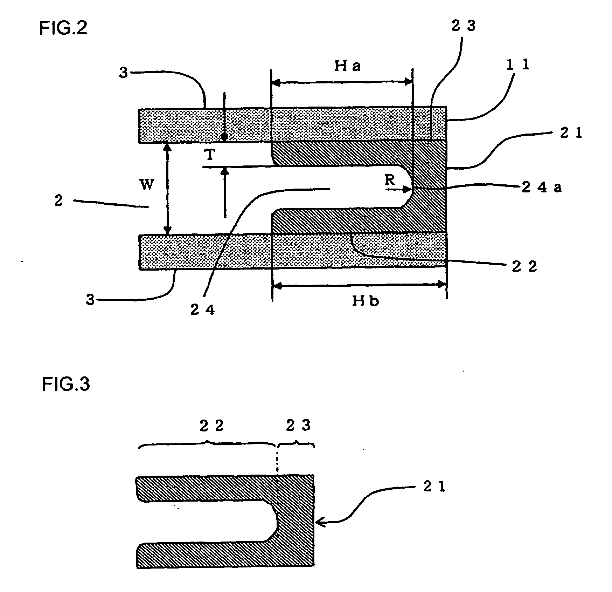

As shown in Figs. 1A, 1B and 2, one embodiment of a honeycomb structure of the present invention comprises a porous honeycomb base material 1 including porous partition walls 3 which extend from one end surface 11 to the other end surface 12 of the base material to define a plurality of cells 2 as through channels of a fluid; and porous plugging portions 21 disposed so as to close open frontal areas of predetermined cells 2 in the one end surface 11 and open frontal areas of the remaining cells 2 in the other end surface 12. The plugging portions 21 disposed in the one end surface 11 have a bottomed tubular shape to open inside the cells 2 and to close the open frontal areas of the cells, the average thickness (the average value of thicknesses T of the walls of tubular portions 22) of the walls of the tubular portions 22 of the bottomed tubular plugging portions 21 is from 0.1 to 0.3 times a width W of each cell 2 in a cross section of each plugging portion crossing the central axis thereof at right angles, a length Ha of each tubular portion 22 in a central axis direction thereof is from 0.3 to 0.8 times a length Hb of the plugging portion 21 in the central axis direction thereof, and a tip portion 24a of a space portion 24 in the tubular portion 22 of the plugging portion 21 has an outwardly convex circular shape with a radius (a radius R of the tip portion of the space portion) of 0.5 mm or more in the cross section of the plugging portion 21 including the central axis thereof. It is to be noted that the bottomed tubular plugging portions may be formed in not only the one end surface but also the other end surface of the base material. As shown in Fig. 3, the bottomed tubular plugging portion 21 is constituted of the tubular portion 22 and a bottom portion 23 which closes one end of the tubular portion 22. Fig. 1A is a perspective view schematically showing one embodiment of the honeycomb structure of the present invention, and Fig. 1B is a schematic diagram showing the cross section of the embodiment of the honeycomb structure of the present invention parallel to the central axis direction. Fig. 2 is an enlarged schematic diagram of a region A of Fig. 1B. Fig. 3 is a schematic diagram showing the cross section of the bottomed tubular plugging portion 21 of the embodiment of the honeycomb structure of the present invention cut along a plane including the central axis of the plugging portion.

As shown in Figs. 1A, 1B and 2, in the honeycomb structure of the present embodiment, the plugging portion 21 disposed in the one end surface 11 has such a bottomed tubular shape as to open inside the cell 2 and to close the open frontal area of the cell. When the honeycomb structure of the present embodiment is used for the purification of the exhaust gas or the like, the one end surface 11 is on the outflow side of the fluid (the exhaust gas or the like). The plugging portion 21 has such a bottomed tubular shape as to open inside the cell 2 and to close the open frontal area of the cell, and "the state in which the bottomed tubular plugging portion 21 opens inside the cell 2 and closes the open frontal area of the cell" is a state in which as shown in Figs. 1B and 2, in the bottomed tubular plugging portion 21 including the tubular portion 22 having one end closed by the bottom portion 23, the open frontal area of the tubular portion 22 faces the inside of the honeycomb structure, and the bottom portion 23 is positioned in the one end surface 11 of the honeycomb structure. Moreover, the bottomed tubular plugging portion 21 may open toward the inside of the cell 2.

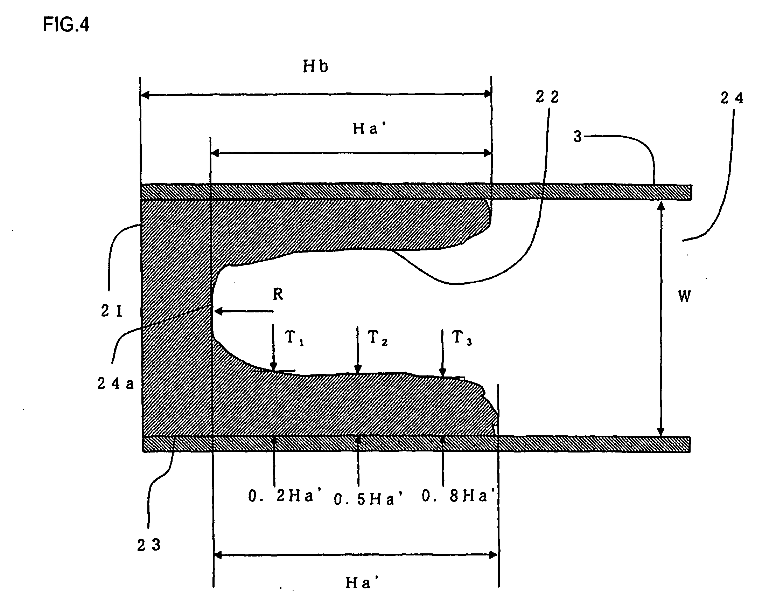

In the honeycomb structure of the present embodiment, the length of the tubular portion 22 of the plugging portion 21 in the central axis direction thereof is from 0.3 to 0.8 times the length of the plugging portion 21 in the central axis direction thereof, and preferably from 0.4 to 0.7 times in respect of the ease of manufacturing. If the length ratio is smaller than 0.3 times, a pressure loss unfavorably does not decrease. Moreover, if the length ratio is larger than 0.8 times, the honeycomb structure is unfavorably easily cracked during regeneration when used as a DPF. The length of the tubular portion 22 in the central axis direction is measured by selecting ten bottomed tubular plugging portions at random from one honeycomb structure and observing, by a microscope, the cross sections of the respective plugging portions cut along a plane crossing the central axes of the cells, that is, the centers of the cell walls (the centers of the widths of the cells). As shown in Fig. 4, in the cross section of each bottomed tubular plugging portion 21 observed by the microscope, a length between the tip portion 24a of the space portion 24 and the open end of the bottomed tubular plugging portion is Ha'. In one bottomed tubular plugging portion among the bottomed tubular plugging portions observed by the microscope, two cross sections of the tubular portion 22 extending along the partition wall are observed. When the lengths Ha' of these two cross sections of the tubular portion 22 are different from each other, the average value of the two lengths is the length Ha' of the tubular portion 22 of the bottomed tubular plugging portion in the central axis direction. Moreover, the average of the lengths Ha' of the tubular portions 22 of the selected ten bottomed tubular plugging portions is obtained as the length Ha (see Fig. 2) of the tubular portion 22 in the central axis direction. Moreover, the length of the plugging portion 21 in the central axis direction is 2 to 10 mm. If the length is smaller than 1 mm, the structural strength of the plugging portion lowers, and the plugging portion is unfavorably easily cracked. Furthermore, if the length is larger than 15 mm, the pressure loss of the DPF unfavorably increases. The measurement of the length of the plugging portion 21 in the central axis direction is performed in the same manner as in the measurement of the length of the tubular portion 22 in the central axis direction except that a portion to be measured is a portion between the end face of the bottom portion 23 and the open end of the bottomed tubular plugging portion. Fig. 4 is a schematic diagram showing the cross section of the bottomed tubular plugging portion of the embodiment of the honeycomb structure of the present invention.

In the honeycomb structure of the present embodiment, the average thickness (the average value of thicknesses T) of the walls of the tubular portions 22 of the bottomed tubular plugging portions 21 is from 0.1 to 0.3 times the width of each cell in the cross section of the plugging portion crossing the central axis thereof at right angles, preferably from 0.2 to 0.3 times in respect of the ease of the manufacturing. If the thickness ratio is smaller than 0.1 times, the rigidity of the plugging portion unfavorably lowers. If the thickness ratio is smaller than 0.2 times, a large heat stress is applied to the honeycomb structure and the plugging portions because the plugging portions need to be dried at a high temperature during the crying, thereby causing a defect such as the cracking sometimes. Moreover, the viscosity of plugging slurry used when forming the plugging portions may be decreased. The shape retention of the plugging slurry unfavorably lower so that the plugging slurry cannot be held in the cells. Moreover, if the thickness ratio is larger than 0.3 times, the honeycomb structure is unfavorably easily be cracked during the regeneration when used as the DPF. The average thickness of the walls of the tubular portions 22 is measured by selecting ten bottomed tubular plugging portions at random from one honeycomb structure and observing, with the microscope, the cross sections of the respective plugging portions cut along the plane crossing the central axes of the cells, that is, the centers of the cell walls (the centers of the widths of the cells). As shown in Fig. 4, in the cross section of each bottomed tubular plugging portion 21 observed by the microscope, thicknesses T1, T2 and T3 of the wall of the tubular portion 22 are measured at positions of 0.2Ha', 0.5Ha' and 0.8Ha' between the tip portion 24a of the space portion and the open end of the bottomed tubular plugging portion. Moreover, the average value of the thicknesses T1, T2 and T3 is T'. In one bottomed tubular plugging portion, two cross sections of the tubular portion 22 extending along the partition walls are observed, and the values T' of the two cross sections of the tubular portion 22 are calculated, respectively, whereby the average value of the two calculated values T' is obtained as the thickness T of the wall of the tubular portion. Moreover, the thicknesses T of the walls of the tubular portions are measured in the selected ten bottomed tubular plugging portions, and the average value of the thicknesses T of the walls of the tubular portions of the ten tubular portions is obtained as the average thickness of the walls of the tubular portions 22. It is to be noted that "Ha"' in "the positions 0.2Ha', 0.5Ha' and 0.8Ha' between the tip portion 24a of the space portion and the open end of the bottomed tubular plugging portion" is "the length between the tip portion 24a of the space portion 24 and the open end of the bottomed tubular plugging portion".

The tip portion 24a of the space portion 24 formed in the plugging portion 21 has an outwardly convex circular shape with a radius R of 0.5 mm or more in the cross section of the plugging portion 21 including the central axis thereof, preferably an outwardly convex circular shape with a radius R of 0.5 to 3.0 mm in respect of the ease of the manufacturing. If the radius R is smaller than 0.5 mm, the honeycomb structure is unfavorably easily cracked during the regeneration when used as the DPF. The space portion 24 formed in the plugging portion 21 is a bottomed tubular internal space. The tip portion 24a of the space portion 24 is the tip portion of the bottomed tubular internal space on a bottom portion 23 side. Moreover, "the tip portion 24a of the space portion 24 has the outwardly convex circular shape" indicates that the tip portion 24a of the space portion 24 has a circular shape projecting toward the bottom portion 23. The tip portion 24a of the space portion 24 preferably has the completely outwardly convex circular shape, but it does not have to be any completely circular shape. There is not any special restriction on the shape of the tip portion 24a of the space portion 24 as long as any portion having an acute angle is not present. Moreover, when the shape is not completely circular, the radius R is defined as the radius of a circular arc obtained by performing arc approximation by two-dimensional image processing based on five equally spaced points selected from the surface of the tip portion 24a. When the tip portion 24a of the space portion 24 has a completely circular shape, the radius R is a value calculated by performing the arc approximation processing of a sectional shape image obtained by the microscope with a two-dimensional image measurement device.

In the honeycomb structure of the present embodiment, the average pore diameter of the plugging portions 21 is preferably 0.1 to 10 µm, further preferably 1 to 10 µm. If the average pore diameter is larger than 10 µm, a particulate material enters pores to close the pores, and the pressure loss increases sometimes. If the average pore diameter of the plugging portions 21 is smaller than 0.1 µm, the exhaust gas does not easily pass through the plugging portions, which increases the pressure loss sometimes. The average pore diameter of the plugging portions 21 is a value measured by a mercury porosimeter.

The porosities of the plugging portions 21 are 30 to 60%, further preferably 35 to 55%. If the porosities are smaller than 30%, the pressure loss increases, and the amount of the exhaust gas to be treated decreases sometimes. If the porosities are larger than 60%, the plugging portions 21 become brittle and easily break down. Moreover, since the strength lowers, the cracking might easily occur owing to the heat stress generated during the regeneration of the DPF. The porosities of the plugging portions 21 are values measured by the mercury porosimeter. The plugging portions 21 have the above average pore diameter and porosities, and can hence function as the filter, which increases an effective filter area.

In a honeycomb structure 100 of the present embodiment, the cells 2 including the plugging portions 21 formed in the one end of the structure and the cells 2 including the plugging portions 21 formed in the other end thereof are alternately arranged, and the cells having the end surfaces plugged and the cells having the end surfaces unplugged (unclosed) preferably form a checkered pattern.

Preferable examples of a material of the plugging portions 21 include a material including a ceramic material as a main component. When the plugging portions are made of the material including the ceramic material as the main component, specific examples of the ceramic material include silicon carbide, cordierite, alumina titanate, sialon, mullite, silicon nitride, zirconium phosphate, zirconia, titania, alumina, silica, lithium aluminum silicate (LAS), and a combination of them. In particular, ceramic materials such as silicon carbide, cordierite, mullite, silicon nitride, alumina and alumina titanate are preferable because they have a resistance to alkali. Above all, an oxide-based ceramic material is also preferable in view of cost. The same material as that of the porous base material is especially preferable because the material is excellent in resistance to thermal shock.

In the honeycomb structure 100 of the present embodiment, the porous base material 1 has a honeycomb shape and includes the porous partition walls 3 which define the plurality of cells 2 as the through channels of the fluid, and the partition walls 3 have an average pore diameter of preferably 5 to 30 µm, further preferably 10 to 25 µm. If the average pore diameter is smaller than 5 µm, the pressure loss increases sometimes even in a case where the amount of the deposited particulate material is small. If the average pore diameter is larger than 30 µm, the honeycomb structure 100 becomes brittle and easily breaks down sometimes, and a soot collection performance might deteriorate. The average pore diameter of the partition walls 3 is a value measured by the mercury porosimeter.

The partition walls 3 have porosities of preferably 30 to 70%, further preferably 40 to 60% in respect of the ease of the manufacturing. If the porosities are smaller than 30%, the pressure loss increases sometimes. If the porosities are larger than 70%, the honeycomb structure 100 becomes brittle and easily breaks down sometimes. The porosities of the partition walls 3 are values measured by the mercury porosimeter.

The partition walls 3 have thicknesses of preferably 0.20 to 0.50 mm, further preferably 0.25 to 0.45 mm in respect of the ease of the manufacturing. If the thicknesses are smaller than 0.20 mm, the strength of the honeycomb structure 100 lowers sometimes. If the thicknesses are larger than 0.50 mm, the pressure loss increases sometimes when the exhaust gas passes through the cells. The thicknesses of the partition walls 3 are values measured by a method of observing the cross sections of the partition walls in the axial direction thereof by the microscope.

The cross section of the honeycomb structure 100 (the porous base material 1) crossing the central axis thereof at right angles has a cell density of preferably 6 to 600 cpsi (0.9 to 93 cells/cm²), further preferably 50 to 400 cpsi (7.8 to 62 cells/cm²). If the cell density is smaller than 0.9 cells/cm², the strength of the honeycomb structure 100 lowers sometimes. If the cell density is larger than 93 cells/cm², the pressure loss increases sometimes.

There is not any special restriction on the cell shape of the honeycomb structure 100, but the cross section of the honeycomb structure crossing the central axis thereof at right angles preferably has a polygonal shape such as a triangular, quadrangular, pentangular or hexagonal shape, a circular shape, an elliptic shape or another amorphous shape.

Preferable examples of a material of the porous base material 1 (the partition walls 3) of the present embodiment include a material including a ceramic material as a main component. When the porous base material is made of the material including the ceramic material as the main component, specific examples of the ceramic material include silicon carbide, cordierite, alumina titanate, sialon, mullite, silicon nitride, zirconium phosphate, zirconia, titania, alumina, silica, lithium aluminum silicate (LAS), and a combination of them. In particular, ceramic materials such as silicon carbide, cordierite, mullite, silicon nitride, alumina and alumina titanate are preferable because they have an excellent resistance to alkali. Above all, the oxide-based ceramic material is also preferable in view of the cost.

There is not any special restriction on the outer shape of the honeycomb structure 100, but examples of the outer shape include a cylindrical shape, an elliptic tubular shape, a polygonal bottomed cylindrical shape having, for example, quadrangular tubular shape, a cylindrical shape having an amorphous bottom surface and the like. Moreover, there is not any special restriction on the size of the honeycomb structure, but the length of the honeycomb structure in the central axis direction thereof is preferably 40 to 500 mm. Furthermore, when the outer shape of the honeycomb structure 100 is, for example, the cylindrical shape, the radius of the bottom surface of the structure is preferably 50 to 500 mm.

Moreover, the honeycomb structure 100 may have an outer peripheral wall positioned at the most outer periphery thereof. It is to be noted that the outer peripheral wall is preferably an integrally formed wall which is formed integrally with the porous base material during formation, but it is also preferably a cement-coated wall which is obtained by grinding the outer periphery of the porous base material into a predetermined shape after the formation, and then forming the outer peripheral wall with a cement or the like.

In the honeycomb structure 100 of the present embodiment, a catalyst for burning and removing the particulate material is preferably loaded on the surfaces and/or insides of the partition walls 3 in the cells 2.
The catalyst is loaded on the surfaces and/or insides of the partition walls 3, whereby the particulate material collected on the partition walls 3 can effectively be burnt and removed.

Specific examples of the catalyst loaded on the partition walls 3 include an oxide catalyst for purifying the exhaust gas from a diesel engine. The oxide catalyst for purifying the exhaust gas from the diesel engine contains a noble metal. Examples of this noble metal preferably include one or more selected from the group consisting of Pt, Rh and Pd. It is to be noted that the total amount of the noble metal is preferably 0.17 to 7.07 g per liter of the volume of the honeycomb structure. The noble metal may be used together with an SCR catalyst for the selective reduction of NOx, or a NOx adsorber.

The SCR catalyst for the selective reduction of NOx contains at least one selected from the group consisting of metal replacing zeolite, vanadium, titania, tungsten oxide, silver and alumina. The NOx adsorber contains an alkali metal and/or an alkali earth metal. Examples of the alkali metal include K, Na and Li. Examples of the alkali earth metal include Ca. It is to be noted that the total amount of K, Na, Li and Ca is preferably 5 g or more per liter of the volume of the honeycomb structure.

Moreover, the honeycomb structure of the present invention may be a bonded honeycomb structure obtained by bonding the side surfaces of a plurality of honeycomb structures to one another.

Next, a manufacturing method of the honeycomb structure according to one embodiment of the present invention will be described. The honeycomb structure of the present embodiment can be manufactured by, for example, the following method, but the manufacturing method of the honeycomb structure of the present embodiment is not limited to the following method.

The porous base material (a formed honeycomb article) of the honeycomb structure of the present invention can be manufactured in conformity to the manufacturing method of a heretofore known diesel particulate filter (DPF). For example, a forming material is first kneaded to form clay, and the obtained clay is preferably formed into a honeycomb shape. There is not any special restriction on the method of kneading the forming material to form the clay, and examples of the method include a method using a kneader, a vacuum clay kneader or the like. There is not any special restriction on a method of forming the clay into the formed honeycomb article, and a conventional known forming method such as extrusion or injection may be used. Preferable examples of the method include a method of extruding the material by use of a die having desired cell shape, partition wall thickness and cell density to form the formed honeycomb article. As a material of the die, a hard metal which does not easily wear is preferable.

As the forming material, there is used a ceramic material to which a dispersion medium and an additive have been added, and examples of the additive include an organic binder, an inorganic binder, a pore former and a surfactant.

The particle diameters and blend amount of the ceramic material (aggregate particles) to be used and the particle diameters and blend amount of the pore former to be added can be adjusted to obtain the porous base material having desired porosities and average pore diameter.

After the above formation, the obtained formed honeycomb article may be dried. There is not any special restriction on a drying method, and examples of the method include hot air drying, microwave drying, dielectric drying, pressure reduction drying, vacuum drying and freeze drying. Above all, the dielectric drying, the microwave drying or the hot air drying is preferably performed alone or as a combination of them. Moreover, preferable drying conditions are a drying temperature of 30 to 150°C and a drying time of one minute to two hours.

Next, both the end surfaces of the obtained formed honeycomb article are preferably plugged. There is not any special restriction on a plugging method, but one of the end surfaces of the formed honeycomb article is first provided with such a checkered pattern mask as to alternately close the open frontal areas of the cells. The pattern of the mask does not have to be checkered. Then, plugging slurry including the ceramic material, water or alcohol, and the organic binder is stored in a storage container. The ceramic material is preferably the same as that used in the formed honeycomb article. The amount of the ceramic material is preferably 70 to 90 wt% of the whole plugging slurry. Moreover, 10 to 30 mass% of the water or alcohol is preferably included in the whole plugging slurry, and 0.1 to 2.0 mass% of the organic binder is preferably included in the whole plugging slurry. Examples of the organic binder include hydroxypropoxyl methylcellulose, and methylcellulose. Then, the masked end of the article is immersed into the storage container, and the plugging slurry is charged into the open frontal areas of the cells which are not provided with any mask, to form the plugging portions.

Here, when the plugging portions are formed in both the end surfaces of the formed honeycomb article, the bottomed tubular plugging portions are formed in at least one of the end surfaces. Moreover, to form the bottomed tubular plugging portions, the plugging slurry has a viscosity of 150 to 550 Pa•s, further preferably 200 to 500 Pa•s. When the viscosity of the plugging slurry is set to such a range and the plugging slurry charged in the one end of each cell is dried, the surface of the charged plugging slurry facing the inside of the cell (the surface of the slurry facing the inside of the formed honeycomb article and including the formed open frontal areas) is depressed in accordance with the progress of the drying, and the bottomed tubular plugging portions can finally be obtained. This is because during the drying, the water contained in the plugging slurry passes through the partition walls and discharged from the cells provided with the plugging slurry, whereby the plugging slurry in the centers of the cells (the centers of the cells in the central axis direction thereof) moves toward the partition walls to form cavities (the space portions 24) in the centers of the cells. If the viscosity of the plugging slurry is lower than 150 Pa•s, the plugging slurry is not charged into the ends of the cells but flows down. If the viscosity is higher than 550 Pa•s, the bottomed tubular plugging portions cannot be obtained sometimes. Moreover, when the charged plugging slurry is dried, the formed honeycomb article is preferably disposed in a drier so that the one end surface of the article charged with the plugging slurry is directed downwards in a vertical direction. In consequence, the bottomed tubular plugging portions including the tubular portions having a uniform wall thickness can efficiently be obtained. However, in the case of a honeycomb structure formed by bonding a plurality of honeycomb segments to one another, the plugging portions of each honeycomb segment are dried, and hence a drying time shortens. Therefore, unlike the above case, the end surface of the segment does not have to be directed downwards in the vertical direction during the drying, but the segment may longitudinally be installed in a horizontal direction and dried. Even in this case, the bottomed tubular plugging portions including the tubular portions having a uniform wall thickness can be obtained. It is to be noted that the viscosity of the plugging slurry is a value measured by a rotary viscosity meter having a rotation number of 30 rpm at a slurry temperature of 30°C.

Moreover, to form columnar plugging portions which are not bottomed tubular, the viscosity of the plugging slurry is preferably from 600 to 1200 Pa•s. Furthermore, the drying time of the plugging portions is preferably from 60 to 120 minutes.

Additionally, the drying time of the plugging portions is preferably from 40 to 80 minutes so that the average thickness of the walls of the tubular portions 22 (the average value of the thicknesses T of the walls of the tubular portions 22) is from 0.1 to 0.3 times the width W of each cell 2 in a cross section of each plugging portion crossing the central axis thereof at right angles. Moreover, the slurry viscosity of the plugging slurry is preferably from 150 to 550 Pa•s so that the length Ha of each tubular portion 22 in the central axis direction thereof is from 0.3 to 0.8 times the length Hb of the plugging portion 21 in the central axis direction thereof. To obtain the plugging slurry having a viscosity in such a range, 70 to 80 mass% of the ceramic material is preferably included in the whole plugging slurry. Moreover, 20 to 30 mass% of the water or alcohol is preferably included in the whole plugging slurry, and 0.1 to 1.0 mass% of the organic binder is preferably included in the whole plugging slurry. Furthermore, the drying temperature is from 60 to 120°C so that the tip portion 24a of the space portion 24 of the bottomed tubular plugging portion 21 has an outwardly convex circular shape with a radius of 0.5 mm or more. If the drying temperature of the slurry around the partition walls is high, the thicknesses T of the walls of the tubular portions tend to increase because the slurry dries and thickens before flowing. If the drying temperature is low, the slurry dries while flowing, and the thicknesses of the walls tend to decrease. The lengths Ha of the tubular portions in the central axis direction thereof increase, because the slurry has high flow properties, as the viscosity of the slurry is low. The lengths tend to decrease, because the slurry has low flow properties, as the viscosity is high. The radiuses R of the tip portions of the space portions have a small value, because the moving amount of the slurry during the drying decreases, as the drying time is short. When the drying time is long, the moving amount of the slurry increases, and hence the radiuses tend to increase.

Moreover, in the other end of the formed honeycomb article, the cells each having one end plugged are provided with the mask, and the plugging portions are formed in the same manner as in the method of forming the plugging portions in the one end of the article. In consequence, the cells each having one end unplugged are plugged at the other end thereof, and the other end of the article also has a structure in which the cells are alternately closed in the checkered pattern. Furthermore, a fired honeycomb article formed by firing the formed honeycomb article may be plugged. In this case, the fired honeycomb article is plugged and fired again, thereby obtaining the porous base material.

Next, the formed honeycomb article provided with the plugging portions is preferably dried to prepare a dried honeycomb article. There is not any special restriction on a drying method, and a known drying method such as the hot air drying, the microwave drying, the dielectric drying, the pressure reduction drying, the vacuum drying or the freeze drying may be used. Above all, a drying method by the hot air drying combined with the microwave drying or the dielectric drying is preferably in that the whole formed article can quickly and uniformly be dried. When the formed honeycomb article is dried, the end (the one end) of the formed honeycomb article including the formed bottomed tubular plugging portions is preferably directed downwards during the drying. When the one end of the article is directed downwards, the surface of the charged plugging slurry facing the inside of each cell is preferably uniformly depressed about the center thereof. However, in the case of the honeycomb structure formed by bonding the plurality of honeycomb segments to one another, the plugging portions of each honeycomb segment are dried, so that the plugging portions can readily and uniformly be dried. Therefore, unlike the above case, the end surface of the segment does not have to be directed downwards in the vertical direction during the drying, but the segment may longitudinally be installed in the horizontal direction and dried. Even in this case, the bottomed tubular plugging portions including the tubular portions having a uniform wall thickness can be obtained.

Next, the resultant dried honeycomb article is preferably calcinated to prepare a calcinated article before fired. "The calcinating" is an operation of burning and removing an organic material (the organic binder, a dispersant, the pore former or the like) in the formed honeycomb article. In general, the burning temperature of the organic binder is from about 100 to 300°C, and the burning temperature of the pore former is from about 200 to 800°C, so that a calcinating temperature may be from about 200 to 1000°C. There is not any special restriction on a calcinating time, but the calcinating is usually from about 10 to 100 hours.

Next, the resultant calcinated is fired (finally fired) to obtain the porous base material. In the present invention, "the final firing" is an operation of sintering and densifying the forming material in the calcinated article to secure a predetermined strength. Firing conditions (temperature•hours) vary in accordance with the type of the forming material, and hence appropriate conditions may be selected in accordance with the type. However, when, for example, a cordierite material is fired, a firing temperature is preferably from 1410 to 1440°C. Moreover, the material is preferably fired for about 3 to 200 hours.

There is not any special restriction on a method of loading the catalyst into the honeycomb structure of the present embodiment, and the catalyst can be loaded by a known method. For example, catalyst slurry containing a predetermined catalyst is first prepared. Next, this catalyst slurry is applied to the partition walls of the honeycomb structure by a method such as a suction method. Afterward, the honeycomb structure is dried at room temperature or on heating conditions, whereby the catalyst can be loaded into the honeycomb structure.

When the plurality of honeycomb segments are bonded to prepare one honeycomb structure, a plurality of honeycomb structures are prepared by the above manufacturing method, and the obtained honeycomb structures are used as the honeycomb segments. The side surfaces of the honeycomb segments are preferably bonded to one another to obtain the honeycomb structure. The honeycomb segments are preferably bonded by a bonding material. There is not any special restriction on the bonding material, and a known bonding material containing a ceramic material may be used.

### [Examples]

Hereinafter, the present invention will further specifically be described with respect to examples, but the present invention is not limited to these examples.

### (Example 1)

In the present example, a honeycomb structure formed by bonding a plurality of honeycomb segments was manufactured.

### (Preparation of Honeycomb Segment)

As a material of a honeycomb segment, SiC powder and a metal Si powder were mixed at a mass ratio of 80:20, starch and resin balloon were added as a pore former to this mixture, and methylcellulose, hydroxypropoxyl methylcellulose, a surfactant and water were further added thereto, to prepare a kneaded clay having plasticity. Next, this forming clay was extruded, and dried by microwaves and hot air to obtain a formed honeycomb segment article having a partition wall thickness of 310 µm, a cell density of about 46.5 cells/cm² (300 cells/square inch), a square cross section with a side of 35 mm and a length of 152 mm.

Next, plugging portions were formed in the obtained formed honeycomb segment article. The open frontal areas of cells in one end surface of the obtained formed honeycomb segment article were alternately masked in a checkered pattern, and the masked end of the article was immersed into plugging slurry containing the SiC powder as a ceramic material, to form the plugging portions alternately arranged in the checkered pattern. The viscosity of the plugging slurry used when plugging the one end surface of the article was set to 700 Pa•s. It is to be noted that the viscosity of the plugging slurry was a value measured by a rotary viscosity meter having a rotation number of 30 rpm at a slurry temperature of 30°C. Moreover, 85 mass% of the ceramic material was included in the whole plugging slurry. Furthermore, the other end of each cell having one end plugged was provided with a mask, and the plugging portions were formed in the same manner as in the method of forming the plugging portions in the one end surface of the article. The viscosity of the plugging slurry used when plugging the other end surface of the article was set to 550 Pa•s. Furthermore, 75 mass% of the ceramic material was included in the whole plugging slurry. Then, the formed honeycomb article, in which the plugging slurry was charged into the ends of the cells, was longitudinally disposed in a horizontal direction and dried on conditions including a drying temperature of 100°C and a drying time of 40 minutes. In consequence, the plugging portions in the other end surface of the formed honeycomb article were bottomed tubular.

The formed honeycomb segment article including the formed plugging portions was dried, degreased in atmospheric air at about 400°C, and then fired in an Ar inactive atmosphere at about 1450°C, to obtain the honeycomb segment having a porous structure where SiC crystal particles were bound by Si.

### (Preparation of Bonding Material)

Aluminosilicate fibers as inorganic fibers, colloidal silica and puddle as inorganic binders, and SiC as inorganic particles were mixed, and water was further added to the mixture. If desired, an organic binder (CMC, PVA), resin balloon and dispersant were added and kneaded by a mixer for 30 minutes, to obtain a pasted bonding material.

### (Preparation of Plugged Honeycomb Structure)

The outer wall surface (the side surface) of the honeycomb segment was coated with the bonding material having a thickness of about 1 mm to form a bonding material layer. Afterward, a process of disposing another honeycomb segment on the coated surface was repeated, thereby preparing a laminated honeycomb segment article constituted of 16 honeycomb segments. An external pressure was applied to the article, thereby bonding the whole article, followed by drying at 140°C for two hours, whereby a bonded honeycomb segment article was obtained. Afterward, the outer periphery of the bonded honeycomb segment article was ground into a cylindrical shape, and coated with a coating material, followed by drying and hardening at 700°C for two hours, whereby a cylindrical honeycomb structure having a diameter of 144 mm and a total length of 152 mm was obtained.

In the obtained honeycomb structure, a porous base material had a cell density of 46.5 cells/cm² (300 cpsi), and partition walls had a thickness of 310 µm (12 mil).
The porous base material had an average pore diameter of 20 µm and a porosity of 50%. The plugging portions had a porosity of 40% and an average pore diameter of 9 µm. The porosity and average pore diameter were values measured by a commercially available mercury porosimeter. The average value of thicknesses T of walls of tubular portions of the bottomed tubular plugging portions in the one end surface of the honeycomb structure (hereinafter referred to as "T (average)" sometimes), the average value of widths W of cells in the cross section of the structure crossing the central axis thereof at right angles (hereinafter referred to as "W (average)" sometimes), lengths Ha of the tubular portions in the central axis direction thereof (hereinafter referred to simply as "Ha" sometimes), lengths Hb of the plugging portions in the central axis direction thereof (hereinafter referred to simply as "Hb" sometimes), and radiuses R of circular tip portions of space portions (hereinafter referred to simply as "R" sometimes) were measured by the following methods. The results are shown in Table 1.

The obtained honeycomb structure was subjected to regeneration limit evaluation by the following method, and a pressure loss was also measured. The obtained results are shown in Table 1.

### (Average Value of Thicknesses T of Walls of Tubular Portions)

Ten bottomed tubular plugging portions are selected at random from one honeycomb structure, and the cross sections of the respective plugging portions cut along a plane crossing the central axes of the cells, that is, the centers of cell walls (the centers of cell widths) are observed and measured by a microscope. As shown in Fig. 4, in the cross section of each bottomed tubular plugging portion 21 observed by the microscope, thicknesses T1, T2 and T3 of the wall of the tubular portion 22 are measured at positions of 0.2Ha', 0.5Ha' and 0.8Ha' between the tip portion 24a of the space portion and the open end of the bottomed tubular plugging portion. Moreover, the average value of the thicknesses T1, T2 and T3 is T'. In one bottomed tubular plugging portion, two cross sections of the tubular portion 22 extending along the partition walls are observed, the above values T' of these two cross sections of the tubular portion 22 are calculated, and the average value of the two calculated values T' is obtained as the thickness T of the wall of the tubular portion. Moreover, the thicknesses T of the walls of the tubular portions of the selected ten bottomed tubular plugging portions are measured, and the average value of the obtained thicknesses T of the walls of the tubular portions of the ten plugging portions is obtained as the average value (T (average)) of the thicknesses T of the walls of the tubular portions 22. It is to be noted that "Ha"' in "the positions 0.2Ha', 0.5Ha' and 0.8Ha' between the tip portion 24a of the space portion and the open end of the bottomed tubular plugging portion" is "the length between the tip portion 24a of the space portion 24 and the open end of the bottomed tubular plugging portion".

### (Cell Widths W)

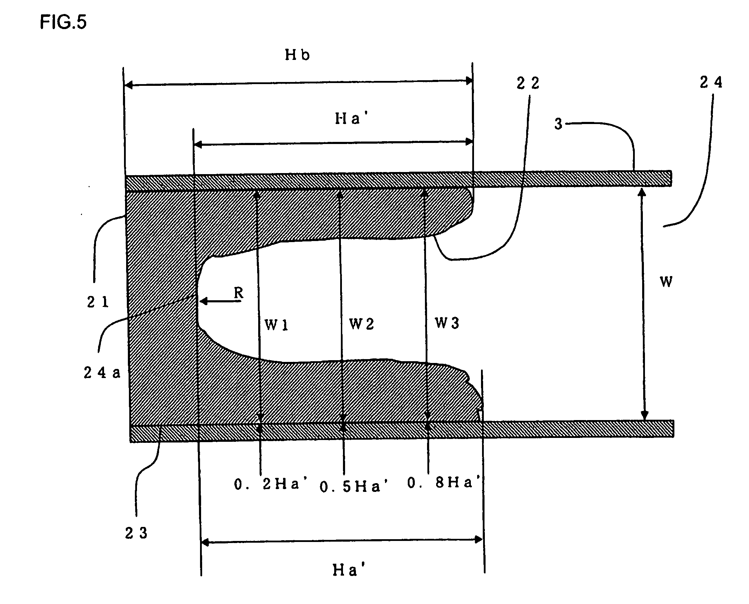

Ten bottomed tubular plugging portions are selected at random from one honeycomb structure, and the cross sections of the respective plugging portions cut along a plane crossing the central axes of the cells, that is, the centers of the cell walls (the centers of the cell widths) are observed and measured with the microscope. As shown in Fig. 5, in the cross section of each bottomed tubular plugging portion 21 observed by the microscope, widths W1, W2 and W3 of each cell are measured at positions of 0.2Ha', 0.5Ha' and 0.8Ha' between the tip portion 24a of the space portion and the open end of the bottomed tubular plugging portion. Moreover, the average value of the widths W1, W2 and W3 is W. Then, the widths W of the selected ten bottomed tubular plugging portions are measured, and the average value of the widths W of the obtained ten cells is obtained as the average value (W (average)) of the widths W of the cells. Fig. 5 is a schematic diagram showing the cross section of the bottomed tubular plugging portion of the embodiment of the honeycomb structure of the present invention.

### (Length Ha of Tubular Portion in Central Axis Direction)

Ten bottomed tubular plugging portions are selected at random from one honeycomb structure, and the cross sections of the respective plugging portions cut along a plane crossing the central axes of the cells, that is, the centers of the cell walls (the centers of the cell widths) are observed and measured with the microscope. As shown in Fig. 4, in the cross section of each bottomed tubular plugging portion 21 observed by the microscope, a length between the tip portion 24a of the space portion 24 and the open end of the bottomed tubular plugging portion is Ha'. In one bottomed tubular plugging portion among the bottomed tubular plugging portions observed by the microscope, two cross sections of the tubular portion 22 extending along the partition walls are observed. However, the lengths Ha' of these two cross sections of the tubular portion 22 are different from each other, the average value of the two lengths is the length Ha' of the tubular portion 22 of the bottomed tubular plugging portion in the central axis direction thereof. Moreover, the average of the lengths Ha' of the tubular portions 22 of the selected ten bottomed tubular plugging portions is obtained as the length Ha (see Fig. 2) of the tubular portion 22 in the central axis direction thereof.

### (Length Hb of Plugging Portion in Central Axis Direction)

The length of each plugging portion in the central axis direction thereof is measured in the same manner as in the measurement of the length Ha of the tubular portion in the central axis direction thereof except that as a portion to be measured, a portion between the end face of the plugging portion on the bottom portion 23 side and the open end of the bottomed tubular plugging portion is measured as shown in Fig. 4.

### (Radius R of Circular Tip Portion of Space Portion)

When the tip portion of the space portion of each bottomed tubular plugging portion is completely circular, the radius R is a value calculated by performing arc approximation processing of a sectional shape image obtained by the microscope with a two-dimensional image measurement device. When the shape of the tip portion of the space portion is not completely circular, the radius R is the radius of a circular arc obtained by performing arc approximation by two-dimensional image processing based on five equally spaced points selected from the surface of the tip portion of the space portion.

### (Regeneration Limit Evaluation)

First, 10 g/L of soot (the amount of the soot deposited per liter of the honeycomb structure) is first deposited on the honeycomb structure. In this state, an engine rotation number is kept at 1800 rpm, an engine torque is kept at 90 N•m, and an exhaust gas from the engine is caused to flow into the honeycomb structure, followed by post injection in this condition. When a pressure difference (a pressure loss) between one end and the other end of the honeycomb structure starts to decrease, the post injection is stopped, and the engine is switched to an idle state. At this time, the maximum temperature in the honeycomb structure, and the maximum temperature gradient in the outlet-side end surface of the honeycomb structure are measured. Moreover, the presence of cracking in the outlet-side end surface of the honeycomb structure is confirmed. When the honeycomb structure is not cracked, the initial amount of the deposited soot is further increased by 1 g/L to repeat the above test until the outlet-side end surface of the honeycomb structure is cracked in order to obtain the maximum temperature gradient of the outlet-side end surface thereof as an end surface cracking limit temperature gradient (a crack limit) (°C/cm).

### (Pressure Loss)

When the exhaust gas discharged from the engine with an engine rotation number of 1800 rpm is caused to flow through the honeycomb structure, a pressure difference (a pressure loss) (kPa) between one end and the other end of the honeycomb structure is measured. A test is performed in a state in which any soot is not deposited in the honeycomb structure.

**[Table 1]**

| Item | Comparative Example 1 | Comparative Example 2 | Example 1 | Example 2 | Example 3 | Comparative Example 3 |
|---|---|---|---|---|---|---|
| Slurry viscosity (Pa•s) | 1000 | 550 | 550 | 550 | 550 | 550 |
| Plugging dry temperature (°C) | 100 | 120 | 100 | 80 | 60 | 40 |
| Plugging dry time (min.) | 40 | 40 | 40 | 40 | 40 | 40 |
| W | 1.50 | 1.50 | 1.50 | 1.50 | 1.50 | 1.50 |
| Hb | 5.00 | 5.02 | 5.03 | 4.99 | 5.02 | 5.00 |
| T (average) | - | 0.53 | 0.45 | 0.23 | 0.15 | 0.143 |
| R | - | 0.5 | 0.5 | 0.6 | 0.7 | 0.6 |
| Ha | - | 1.51 | 1.52 | 1.50 | 1.53 | 1.51 |
| Crack limit (°C/cm) | 198 | 183 | 200 | 195 | 198 | 185 |
| Pressure loss (kPa) | 10 | 9.7 | 9.5 | 9.4 | 9.2 | 9.2 |
| Judgment | - | x | ○ | ○ | ○ | x |

In the column "judgment" of Table 1, when the cracking limit temperature gradient does not lower as much as 10°C/cm or more with respect to Comparative Example 1 and the pressure loss decreases as much as 5% or more with respect to Comparative Example 1, success "o" is shown. When the cracking limit temperature gradient lowers beyond 10°C/cm or the decrease of the pressure loss is less than 5% with respect to Comparative Example 1, failure "x" is shown. When the decrease of the cracking limit temperature gradient is 10°C/cm or more, it is considered that the regeneration limit of the DPF lowers during actual use and that the fuel consumption of a vehicle is adversely affected. Moreover, when the decrease of the pressure loss is 5% or less, it is considered that there is hardly an effect of decreasing fuel consumption or increasing engine output. Moreover, also in Tables 2 to 5, the column "judgment" is shown in the same manner as in Table 1.

### (Example 2)

A honeycomb structure was prepared in the same manner as in Example 1 except that the drying temperature of plugging portions in the other end surface of the structure was set to 80°C. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 1. Moreover, in the same manner as in Example 1, regeneration limit evaluation was performed and a pressure loss was measured by the above methods. The obtained results are shown in Table 1.

### (Example 3)

A honeycomb structure was prepared in the same manner as in Example 1 except that the drying temperature of plugging portions in the other end surface of the structure was set to 60°C. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 1. Moreover, in the same manner as in Example 1, regeneration limit evaluation was performed and a pressure loss was measured by the above methods. The obtained results are shown in Table 1.

### (Comparative Example 1)

A honeycomb structure was prepared in the same manner as in Example 1 except that plugging portions were prepared in the other end surface of the structure on conditions similar to those for preparing the plugging portions in one end surface of the structure and that any bottomed tubular plugging portion was not formed. In the same manner as in Example 1, there were measured cell widths W in the cross sections of the plugging portions crossing the central axes thereof at right angles in the one end surface of the honeycomb structure and lengths Hb of the plugging portions in the central axis direction thereof. The plugging portions of the honeycomb structure of Comparative Example 1 were not bottomed tubular but were usual quadrangular plugging portions. Results are shown in Table 1. Moreover, in the same manner as in Example 1, regeneration limit evaluation was performed and a pressure loss was measured by the above methods. The obtained results are shown in Table 1.

### (Comparative Example 2)

A honeycomb structure was prepared in the same manner as in Example 1 except that the drying temperature of plugging portions in the other end surface of the structure was set to 120°C. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 1. Moreover, in the same manner as in Example 1, regeneration limit evaluation was performed and a pressure loss was measured by the above methods. The obtained results are shown in Table 1.

### (Comparative Example 3)

A honeycomb structure was prepared in the same manner as in Example 1 except that the drying temperature of plugging portions in the other end surface of the structure was set to 40°C. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 1. Moreover, in the same manner as in Example 1, regeneration limit evaluation was performed and a pressure loss was measured by the above methods. The obtained results are shown in Table 1.

### (Example 4)

A honeycomb structure was prepared in the same manner as in Example 1 except that the viscosity of plugging slurry used in plugging portions in the other end surface of the structure was set to 150 Pa•s. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 2. Moreover, in the same manner as in Example 1, regeneration limit evaluation was performed and a pressure loss was measured by the above methods. The obtained results are shown in Table 2.

**[Table 2]**

| Item | Comparative Example 1 | Comparative Example 4 | Example 4 | Example 5 | Example 6 | Comparative Example 5 |
|---|---|---|---|---|---|---|
| Slurry viscosity (Pa•s) | 1000 | 150 | 150 | 150 | 150 | 150 |
| Plugging dry temperature (°C) | 100 | 120 | 100 | 80 | 60 | 40 |
| Plugging dry time (min.) | 40 | 40 | 40 | 40 | 40 | 40 |
| W (average) | 1.50 | 1.50 | 1.50 | 1.50 | 1.50 | 1.50 |
| Hb | 5.00 | 5.05 | 5.03 | 5.01 | 5.02 | 4.99 |
| T (average) | - | 0.53 | 0.45 | 0.23 | 0.15 | 0.143 |
| R | - | 0.6 | 0.5 | 0.5 | 0.5 | 0.5 |
| Ha | - | 4.01 | 4.02 | 3.99 | 4.00 | 3.98 |
| Crack limit (°C/cm) | 198 | 175 | 199 | 198 | 197 | 181 |
| Pressure loss (kPa) | 10 | 9 | 8.8 | 8.6 | 8.4 | 8.4 |
| Judgment | - | x | ○ | ○ | ○ | x |

### (Example 5)

A honeycomb structure was prepared in the same manner as in Example 4 except that the drying temperature of plugging portions in the other end surface of the structure was set to 80°C. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 2. Moreover, in the same manner as in Example 1, regeneration limit evaluation was performed and a pressure loss was measured by the above methods. The obtained results are shown in Table 2.

### (Example 6)

A honeycomb structure was prepared in the same manner as in Example 4 except that the drying temperature of plugging portions in the other end surface of the structure was set to 60°C. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 2. Moreover, in the same manner as in Example 1, regeneration limit evaluation was performed and a pressure loss was measured by the above methods. The obtained results are shown in Table 2.

### (Comparative Example 4)

A honeycomb structure was prepared in the same manner as in Example 4 except that the drying temperature of plugging portions in the other end surface of the structure was set to 120°C. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 2. Moreover, in the same manner as in Example 1, regeneration limit evaluation was performed and a pressure loss was measured by the above methods. The obtained results are shown in Table 2.

### (Comparative Example 5)

A honeycomb structure was prepared in the same manner as in Example 4 except that the drying temperature of plugging portions in the other end surface of the structure was set to 40°C. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 2. Moreover, in the same manner as in Example 1, regeneration limit evaluation was performed and a pressure loss was measured by the above methods. The obtained results are shown in Table 2.

As seen from Tables 1, 2, in the honeycomb structures of Examples 1 to 3 and Comparative Examples 2, 3, Ha was 0.3 times Hb. It was confirmed from Examples 1 to 3 and Comparative Examples 1 to 3 that when T was within a range of 0.1 to 0.3 times W, the pressure loss could be decreased as much as 5% or more with respect to the conventional honeycomb structure of Comparative Example 1. Moreover, it was confirmed that when T was excessively small, the rigidities of the plugging portions lowered and that when T was excessively large, depressed portions could not be ignored but were recognized as defects, and an end surface cracking limit temperature lowered as compared with a conventional technology (Comparative Example 1).

**[Table 3]**

| Item | Comparative Example 1 | Comparative Example 6 | Example 1 | Example 7 | Example 4 | Comparative Example 7 |
|---|---|---|---|---|---|---|
| Slurry viscosity (Pa•s) | 1000 | 650 | 550 | 350 | 150 | 50 |
| Plugging dry temperature (°C) | 100 | 100 | 100 | 100 | 100 | 100 |
| Plugging dry time (min.) | 40 | 40 | 40 | 40 | 40 | 40 |
| W (average) | 1.50 | 1.50 | 1.50 | 1.50 | 1.50 | 1.50 |
| Hb | 5.00 | 5.01 | 5.03 | 5.02 | 5.03 | 5.00 |
| T (average) | - | 0.46 | 0.45 | 0.44 | 0.45 | 0.45 |
| R | - | 0.5 | 0.5 | 0.5 | 0.6 | 0.6 |
| Ha | - | 1.00 | 1.52 | 2.50 | 4.02 | 4.50 |
| Crack limit (°C/cm) | 198 | 201 | 200 | 197 | 199 | 184 |
| Pressure loss (kPa) | 10.0 | 10.0 | 9.5 | 9.2 | 8.8 | 8.5 |
| Judgment | - | x | ○ | ○ | ○ | x |

### (Example 7)

A honeycomb structure was prepared in the same manner as in Example 1 except that the viscosity of plugging slurry used for forming plugging portions in the other end surface of the structure was set to 350 Pa•s. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 3. Moreover, in the same manner as in Example 1, regeneration limit evaluation was performed and a pressure loss was measured by the above methods. The obtained results are shown in Table 3.

### (Comparative Example 6)

A honeycomb structure was prepared in the same manner as in Example 1 except that the viscosity of plugging slurry used for forming plugging portions in the other end surface of the structure was set to 650 Pa•s. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 3. Moreover, in the same manner as in Example 1, regeneration limit evaluation was performed and a pressure loss was measured by the above methods. The obtained results are shown in Table 3.

### (Comparative Example 7)

A honeycomb structure was prepared in the same manner as in Example 1 except that the viscosity of plugging slurry used for forming plugging portions in the other end surface of the structure was set to 50 Pa•s. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 3. Moreover, in the same manner as in Example 1, regeneration limit evaluation was performed and a pressure loss was measured by the above methods. The obtained results are shown in Table 3.

**[Table 4]**

| Item | Comparative Example 1 | Comparative Example 8 | Example 3 | Example 8 | Example 6 | Comparative Example 9 |
|---|---|---|---|---|---|---|
| Slurry viscosity (Pa•s) | 1000 | 650 | 550 | 350 | 150 | 50 |
| Plugging dry temperature (°C) | 100 | 60 | 60 | 60 | 60 | 60 |
| Plugging dry time (min.) | 40 | 40 | 40 | 40 | 40 | 40 |
| W (average) | 1.50 | 1.50 | 1.50 | 1.50 | 1.50 | 1.50 |
| Hb | 5.00 | 5.01 | 5.02 | 4.98 | 5.02 | 5.00 |
| T (average) | - | 0.16 | 0.15 | 0.15 | 0.15 | 0.15 |
| R | - | 0.5 | 0.7 | 0.5 | 0.5 | 0.5 |
| Ha | - | 1.00 | 1.53 | 2.50 | 4.00 | 4.50 |
| Crack limit (°C/cm) | 198 | 200 | 198 | 203 | 197 | 180 |
| Pressure loss (kPa) | 10.0 | 9.8 | 9.2 | 8.7 | 8.4 | 8.0 |
| Judgment | - | x | ○ | ○ | ○ | x |

### (Example 8)

A honeycomb structure was prepared in the same manner as in Example 3 except that the viscosity of plugging slurry used for forming plugging portions in the other end surface of the structure was set to 350 Pa•s. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 4. Moreover, in the same manner as in Example 1, regeneration limit evaluation was performed and a pressure loss was measured by the above methods. The obtained results are shown in Table 4.

### (Comparative Example 8)

A honeycomb structure was prepared in the same manner as in Example 3 except that the viscosity of plugging slurry used for forming plugging portions in the other end surface of the structure was set to 650 Pa•s. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 4. Moreover, in the same manner as in Example 1, regeneration limit evaluation was performed and a pressure loss was measured by the above methods. The obtained results are shown in Table 4.

### (Comparative Example 9)

A honeycomb structure was prepared in the same manner as in Example 3 except that the viscosity of plugging slurry used for forming plugging portions in the other end surface of the structure was set to 50 Pa•s. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 4. Moreover, in the same manner as in Example 1, regeneration limit evaluation was performed and a pressure loss was measured by the above methods. The obtained results are shown in Table 4.

It was confirmed from Tables 3, 4 that when Ha was within a range of 0.3 to 0.8 times Hb, the pressure loss could be decreased as much as 5% or more with respect to the conventional technology of Comparative Example 1. It was confirmed that when Ha was excessively small, a pressure loss decreasing effect could not sufficiently be obtained and that when Ha was excessively large, depressed portions could not be ignored but were recognized as defects, and an end surface cracking limit temperature lowered as compared with the conventional technology.

**[Table 5]**

| Item | Comparative Example 1 | Comparative Example 10 | Example 4 | Example 9 | Example 10 | Example 11 |
|---|---|---|---|---|---|---|
| Slurry viscosity (Pa•s) | 1000 | 150 | 50 | 150 | 150 | 150 |
| Plugging dry temperature (°C) | 100 | 100 | 100 | 100 | 100 | 100 |
| Plugging dry time (min.) | 40 | 20 | 40 | 60 | 80 | 100 |
| W (average) | 1.50 | 1.50 | 1.50 | 1.50 | 1.50 | 1.50 |
| Hb | 5.00 | 4.99 | 5.03 | 5.02 | 4.99 | 5.00 |
| T (average) | - | 0.43 | 0.45 | 0.44 | 0.45 | 0.44 |
| R | - | 0.4 | 0.5 | 1.0 | 2.0 | 3.0 |
| Ha | - | 4.01 | 4.02 | 4.00 | 3.98 | 3.99 |
| Crack limit (°C/cm) | 198 | 180 | 199 | 197 | 199 | 198 |
| Pressure loss (kPa) loss | 10.0 | 9.1 | 8.8 | 9.0 | 8.7 | 9.1 |
| Judgment | - | x | ○ | ○ | ○ | ○ |

### (Example 9)

A honeycomb structure was prepared in the same manner as in Example 4 except that the drying time of plugging portions in the other end surface of the structure was set to 60 minutes. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 5. Moreover, in the same manner as in Example 1, regeneration limit evaluation was performed and a pressure loss was measured by the above methods. The obtained results are shown in Table 5.

### (Example 10)

A honeycomb structure was prepared in the same manner as in Example 4 except that the drying time of plugging portions in the other end surface of the structure was set to 80 minutes. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 5. Moreover, in the same manner as in Example 1, regeneration limit evaluation was performed and a pressure loss was measured by the above methods. The obtained results are shown in Table 5.

### (Example 11)

A honeycomb structure was prepared in the same manner as in Example 4 except that the drying time of plugging portions in the other end surface of the structure was set to 100 minutes. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 5. Moreover, in the same manner as in Example 1, regeneration limit evaluation was performed and a pressure loss was measured by the above methods. The obtained results are shown in Table 5.

### (Comparative Example 10)

A honeycomb structure was prepared in the same manner as in Example 4 except that the drying time of plugging portions in the other end surface of the structure was set to 20 minutes. In the same manner as in Example 1, there were measured an average thickness T of walls of tubular portions of bottomed tubular plugging portions in one end surface of the honeycomb structure, cell widths W in the cross sections of the plugging portions crossing the central axes thereof at right angles, lengths Ha of the tubular portions in the central axis direction thereof, lengths Hb of the plugging portions in the central axis direction thereof and radiuses R of circular tip portions of space portions. Results are shown in Table 5. Moreover, in the same manner as in Example 1, regeneration limit evaluation was performed and a pressure loss was measured by the above methods. The obtained results are shown in Table 5.

It was confirmed from Table 5 that when R was within a range of 0.5 to 3.0, even a product having T and Ha at end surface cracking limit levels had an end surface cracking limit temperature gradient with a level equivalent to that of the conventional technology of Comparative Example 1, and a pressure loss could be decreased as much as 5% or more. It was seen that when R was smaller than 0.5, depressed portions could not be ignored but were recognized as defects, and an end surface cracking limit temperature lowered as compared with the conventional technology. It is to be noted that when R was 0.5 or more, the end surface cracking limit did not have any fluctuation tendency, and also did not have any fluctuation in the pressure loss. Therefore, it is considered that when R is 0.5 or more, the end surface cracking limit with the level equivalent to that of the conventional technology can be secured while sufficiently obtaining the pressure loss decreasing effect.

The honeycomb structure of the present invention is preferably used to collect and remove a particulate material in an exhaust gas discharged from a combustion device such as an internal combustion engine, for example, an engine for an automobile, an engine for a construction machine or a stational engine for an industrial machine.

### [Description of Reference Numerals]

1: porous base material, 2: cell, 3: partition wall, 11: one end surface, 12: other end surface, 21: plugging portion, 22: tubular portion, 23: bottom portion, 24: space portion, 24a: tip portion of space portion, 100: honeycomb structure, W, W1, W2 and W3: cell width, T: thickness of wall of tubular portion, Ha: length of tubular portion in central axis direction, Hb: length of plugging portion in central axis direction, and R: radius of tip portion of space portion.

## Claims

1. A honeycomb structure comprising: a porous honeycomb base material including porous partition walls (3) which extend from one end surface (11) to the other end surface (12) of the base material to define a plurality of cells (2) as through channels of a fluid; and porous plugging portions (21) disposed so as to close open frontal areas of the predetermined cells in the one end surface and open frontal areas of the remaining cells in the other end surface,
wherein the plugging portions (21) disposed in at least the one end surface have a bottomed tubular shape to open inside the cells and to close the open frontal areas of the cells,
the length of the plugging portions is in the range 2 to 10 mm,
the average thickness (T) of the walls of the tubular portions (22) of the bottomed tubular plugging portions is from 0.1 to 0.3 times the width (W) of each cell (2) in a cross section of each plugging portion crossing the central axis thereof at right angles, the length (Ha) of each tubular portion (22) in a central axis direction thereof is from 0.3 to 0.8 times the length (H6) of the plugging portion (21) in the central axis direction thereof, and
the tip portion (24a) of a space portion (24) formed in the bottomed tubular plugging portion has an outwardly convex circular shape with a radius of 0.5 mm or more in the cross section of the plugging portion including the central axis thereof, and
the bottomed tubular plugging portions (21) disposed in the one end surface of the base material have porosities of 30 to 60%.

2. The honeycomb structure according to claim 1, wherein the bottomed tubular plugging portions disposed in the one end surface of the base material have an average pore diameter of 0.1 to 10 µm.

3. The honeycomb structure according to claim 1 or 2, wherein the length of each tubular portion (22) in a central axis direction thereof is from 0.4 to 0.7 times the length of the plugging portion (21) in the central axis direction thereof.

4. A honeycomb structure according to claim 1 produced by charging a slurry including a ceramic material, water or alcohol and organic binder into the cells and drying the slurry to form the bottomed tubular plugging portions, the slurry having a viscosity in the range 150 to 550 Pa.s and the drying temperature being 60 to 120°C.

5. A method of making a honeycomb structure according to claim 1, including charging a slurry including ceramic material, water or alcohol and organic binder into the cells of the honeycomb and drying the slurry to form the bottomed tubular plugging portions, wherein the slurry has a viscosity of 150 to 550 Pa.s and the drying temperature is 60 to 120°C.

6. A method according to claim 5, wherein the viscosity of the slurry is 200 to 500 Pa.s.

7. A method according to claim 5 or 6, wherein the drying time of the plugging portions is 40 to 80 minutes.

## Patentansprüche

1. Wabenstruktur, die Folgendes umfasst: ein poröses Wabenbasismaterial, das Folgendes umfasst: poröse Trennwände (3), die sich von einer Endfläche (11) zu der anderen Endfläche (12) des Basismaterials erstrecken, um eine Vielzahl von Zellen (2) als Durchgangskanäle für ein Fluid zu definieren, und poröse Verschlussabschnitte (21), die so angeordnet sind, dass sie offene Stirnbereiche von vorbestimmten Zellen in der einen Endfläche und offene Stirnbereich der anderen Zellen in der anderen Endfläche verschließen,
wobei die Verschlussabschnitte (21), die zumindest in einer Endfläche angeordnet sind, eine röhrenförmige Form mit Boden aufweisen, die im Inneren der Zellen offen ist und die offenen Stirnbereiche der Zellen verschließt;
die Länge der Verschlussabschnitte im Bereich von 2 bis 10 mm liegt;
die mittlere Dicke (T) der Wände der röhrenförmigen Abschnitte (22) der röhrenförmigen Verschlussabschnitte mit Boden 0,1- bis 0,3-mal so groß ist wie die Weite (W) jeder Zelle (2) im Querschnitt jedes Verschlussabschnitts im rechten Winkel auf dessen Mittelachse, die Länge (Ha) jedes röhrenförmigen Abschnitts (22) in dessen Mittelachsenrichtung 0,3 bis 0,8 mal so lang ist wie die Länge (H6) des Verschlussabschnitts (21) in dessen Mittelachsenrichtung, und
der Spitzenabschnitt (24a) eines in dem röhrenförmigen Verschlussabschnitt mit Boden ausgebildeten Zwischenraumabschnitts (24) eine nach außen konvexe, kreisförmige Form mit einem Radius von 0,5 mm oder mehr im Querschnitt des Verschlussabschnitts, der dessen Mittelachse umfasst, aufweist, und
die röhrenförmigen Verschlussabschnitte (21) mit Boden, die in der einen Endfläche des Basismaterials angeordnet sind, eine Porosität von 30 bis 60 % aufweist.

2. Wabenstruktur nach Anspruch 1, worin die röhrenförmigen Verschlussabschnitte mit Boden, die in der einen Endfläche des Basismaterials vorliegen, einen mittleren Porendurchmesser von 0,1 bis 10 µm aufweisen.

3. Wabenstruktur nach Anspruch 1 oder 2, worin die Länge jedes röhrenförmigen Abschnitts (22) in dessen Mittelachsenrichtung 0,4- bis 0,7-mal so lang ist wie die Länge des Verschlussabschnitts (21) in dessen Mittelachsenrichtung.

4. Wabenstruktur nach Anspruch 1, die durch das Einfüllen einer Aufschlämmung, die ein Keramikmaterial, Wasser oder Alkohol und ein organisches Bindemittel umfasst, in die Zellen und das Trocknen der Aufschlämmung zur Ausbildung der röhrenförmigen Verschlussabschnitte mit Boden hergestellt wird, wobei die Aufschlämmung eine Viskosität im Bereich von 150 bis 550 Pas aufweist und die Trockentemperatur 60 bis 120 °C beträgt.

5. Verfahren zur Herstellung einer Wabenstruktur nach Anspruch 1, das Folgendes umfasst: das Einfüllen einer Aufschlämmung, die ein Keramikmaterial, Wasser oder Alkohol und ein organisches Bindemittel umfasst, in die Wabenzellen und das Trocknen der Aufschlämmung zur Ausbildung der röhrenförmigen Verschlussabschnitte mit Boden hergestellt wird, wobei die Aufschlämmung eine Viskosität im Bereich von 150 bis 550 Pa·s aufweist und die Trockentemperatur 60 bis 120 °C beträgt.

6. Verfahren nach Anspruch 5, worin die Viskosität der Aufschlämmung 200 bis 500 Pa·s beträgt.

7. Verfahren nach Anspruch 5 oder 6, worin die Trockendauer der Verschlussabschnitte 40 bis 80 min beträgt.

## Revendications

1. Structure en nid d'abeilles comprenant : un matériau de base en nid d'abeilles poreux comprenant des parois de séparation poreuses (3) qui s'étendent à partir d'une surface d'extrémité (11) à l'autre surface d'extrémité (12) du matériau de base afin de définir une pluralité de cellules (2) comme des canaux traversants d'un fluide ; et des parties d'obturation poreuses (21) disposées afin de fermer les zones frontales ouvertes des cellules prédéterminées dans la première surface d'extrémité et des zones frontales ouvertes des cellules restantes dans l'autre surface d'extrémité,
dans laquelle les parties d'obturation (21) disposées au moins dans la première surface d'extrémité ont une forme tubulaire à fond pour s'ouvrir à l'intérieur des cellules et fermer les zones frontales ouvertes des cellules,
la longueur des parties d'obturation est dans la plage de 2 à 10 mm,
l'épaisseur moyenne (T) des parois des parties tubulaires (22) des parties d'obturation tubulaires à fond représente de 0,1 à 0,3 fois la largeur (W) de chaque cellule (2) dans une section transversale de chaque partie d'obturation traversant son axe central en angle droit, la longueur (Ha) de chaque partie tubulaire (22) dans la direction de son axe central représente de 0,3 à 0,8 fois la longueur (Hb) de la partie d'obturation (21) dans la direction de son axe central, et
la partie de pointe (24a) d'une partie d'espace (24) formée dans la partie d'obturation tubulaire à fond a une forme circulaire convexe vers l'extérieur avec un rayon de 0,5 mm ou plus dans la section transversale de la partie d'obturation comprenant son axe central, et
les parties d'obturation tubulaires à fond (21) disposées dans la première surface d'extrémité du matériau de base ont des porosités de 30 à 60%.

2. Structure en nid d'abeilles selon la revendication 1, dans laquelle les parties d'obturation tubulaires à fond disposées dans la première surface d'extrémité du matériau de base ont un diamètre de pore moyen de 0,1 à 10 µm.

3. Structure en nid d'abeilles selon la revendication 1 ou 2, dans laquelle la longueur de chaque partie tubulaire (22) dans la direction de son axe central représente de 0,4 à 0,7 fois la longueur de la partie d'obturation (21) dans la direction de son axe central.

4. Structure en nid d'abeilles selon la revendication 1, produite en chargeant une pâte comprenant un matériau en céramique, de l'eau ou de l'alcool et un liant organique dans les cellules et en faisant sécher la pâte afin de former des parties d'obturation tubulaires à fond, la pâte ayant une viscosité dans la plage de 150 à 550 Pa.s et la température de séchage étant de 60 à 120°C.

5. Procédé pour fabriquer une structure en nid d'abeilles selon la revendication 1, comprenant les étapes consistant à charger une pâte comprenant un matériau en céramique, de l'eau ou de l'alcool et un liant organique dans les cellules du nid d'abeilles et en faisant sécher la pâte pour former des parties d'obturation tubulaires à fond, dans lequel la pâte a une viscosité de 150 à 550 Pa.s et la température de séchage est de 60 à 120°C.

6. Procédé selon la revendication 5, dans lequel la viscosité de la pâte est de 200 à 500 Pa.s.

7. Procédé selon la revendication 5 ou 6, dans lequel le temps de séchage des parties d'obturation est de 40 à 80 minutes.
